# EUROPEAN PATENT SPECIFICATION

(11) **EP 2 397 428 B1**
(45) Date of publication and mention of the grant of the patent: **03.04.2013**
(21) Application number: 11170156.1
(22) Date of filing: 16.06.2011
(51) Int. Cl.: B65G 57/03, B65G 57/14

(54) **Apparatus and method for stacking packaging units**
Vorrichtung und Verfahren zum Stapeln von Verpackungseinheiten
Appareil et procédé pour empiler des unités d' emballage

(30) Priority: 18.06.2010 EP 10006335
(43) Date of publication of application: 21.12.2011
(73) Proprietor: FPS Food Processing Systems B.V., 1183 AT Amstelveen (NL)
(72) Inventor: van Ravenhorst, Barend, 1183 AT Amstelveen (NL)
(74) Representative: Jansen, Cornelis Marinus

(56) References cited:
- EP-A1- 0 937 668
- EP-B1- 1 015 357
- JP-A- 2002 284 349
- US-A- 2 407 782
- US-A- 2 895 624
- US-A- 4 646 908

## Description

The present invention relates to an apparatus and a method for stacking substantially rectangular packaging units, for example trays, to form a substantially vertical stack, as described in the introductory portions of the appended claims 1 and 10.

Such an apparatus and method are known from EP386347. In, for example, Figure 2 of that document it is clearly indicated how trays for eggs are supplied, with pick-up members of a pick-up system which is part of a circular conveying system of a stacker, how the trays are picked up to be stacked with such a pick-up system, and how thereupon the thus formed stack is discharged. More particularly, such a conveying system comprises two pick-up systems distributed over the circular path, which each successively pick up a respective next tray supplied and thereupon, on the downstream side of the conveying system during the descending movement, place it directly onto a carrier, or onto a stack already partly formed on the carrier. After each placement of a tray, the thus partly formed stack will have to be rotated a quarter turn in order to have the trays, in view of their well known and conventional shape, form a stable stack. In the apparatus according to that document, such rotation will be carried out after the pick-up system has passed the stack then formed. Such a pick-up member is represented in detail in Figure 5 of that document, both for a situation of placement of a tray and for a situation just after placement, when the pick-up member can pivot freely and, in its path further downwards, slightly drags along the partly formed stack.

To those skilled in the art it will be clear that in such an approach of stacking, the conveying system, though depending on the dimensions thereof, can only comprise a limited number of pick-up systems. Accordingly, the processing capacity is limited as well.

In order to enlarge especially the processing capacity mentioned, the apparatus according to the present invention is characterized in that such a pick-up member is driven, whereby, from at least a predetermined height of the stack formed and after placement of a packaging unit, such pick-up member is moved away from the stack at the stacking location.

In a suitable manner, this enables rotation while the pick-up member passes the partly formed stack. An advantage of this construction is that more pick-up systems can be arranged than the two according to EP386347. Thus, it will be possible to enlarge the processing capacity. It is noted that more pick-up systems will not necessitate greater height dimensions of the stacker. Moreover, a combination can be found where multiple pick-up systems are arranged but the speed of the pick-up systems is nonetheless lower than before. This last implies that a more careful handling of the packaging units is rendered possible, which therefore entails a lesser chance of possible damage of fragile products being packed and carried along.

The characterizing feature of the invention may also be defined, for example, as follows: a pick-up member drive or control which is configured to move the pick-up member away from the stack, at least, away from a stacking area extending above the carrier, for reception of the stack to be formed. Preferably, the pick-up member is drivable such that it is movable from an initial position (to support a packaging unit) to a position in which the pick-up member is at a distance from a stacking area, in particular such that the carrier with a stack can be rotated without being hindered by the pick-up member moving (downwards) along the stacking area.

A further exemplary embodiment of the apparatus according to the present invention has one or more of the following features: that the pick-up member comprises a cam which is guided in a steering track, whereby the pick-up member is moved away from the stack; that the steering track, in guiding the cam, turns the pick-up member away from the stack in downstream direction upwardly about a pick-up member axis, the steering track extending in vertical direction downwards beyond the carrier; and
that the pick-up member is connected with a biased spring, whereby upon placement of the packaging unit the pick-up member is pushed upwards about a pick-up member axis and is turned upwards downstream by the spring.

According to a further elaboration, in the stacking order the even and the odd stacked packaging units may be rotated a quarter turn with respect to each other. Further, the rotation unit may be configured for, after placement of a next individual packaging unit, rotating the carrier with the packaging units placed thereon through a quarter turn. Furthermore, for example, a partial stack may be built up without rotating the respective packaging units.

Furthermore, the method according to the present invention is characterized in that at least at a predetermined height of the at least partly formed stack, after placement of a packaging unit thereon, the respective pick-up members are moved away from the stack.

It has been found that with such a conveying and stacking scheme, more pick-up systems than heretofore can be deployed, as a result of which the processing capacity will be increased accordingly.

Further advantageous elaborations of the invention are set forth in the subclaims.

The apparatus and method according to the present invention will be described and elucidated in detail hereinbelow with reference to a drawing in which:
FIGURE 1 is a schematic front view of a stacker for the situation where a packaging unit carried along is approaching a partly formed stack from above,
FIGURE 2 is a similar view, now for the situation where the packaging unit carried along has just reached the partly formed stack,
FIGURE 3 is a similar view for the situation right before the stack is going to be rotated through a quarter turn about a vertical axis,
FIGURE 4 is a schematic isometric view of an exemplary embodiment of a pick-up member with cam and steering track, and
FIGURE 5 is a side view of the pick-up member according to FIGURE 4. In these FIGURES the same parts and designations are indicated with the same numerals or characters.

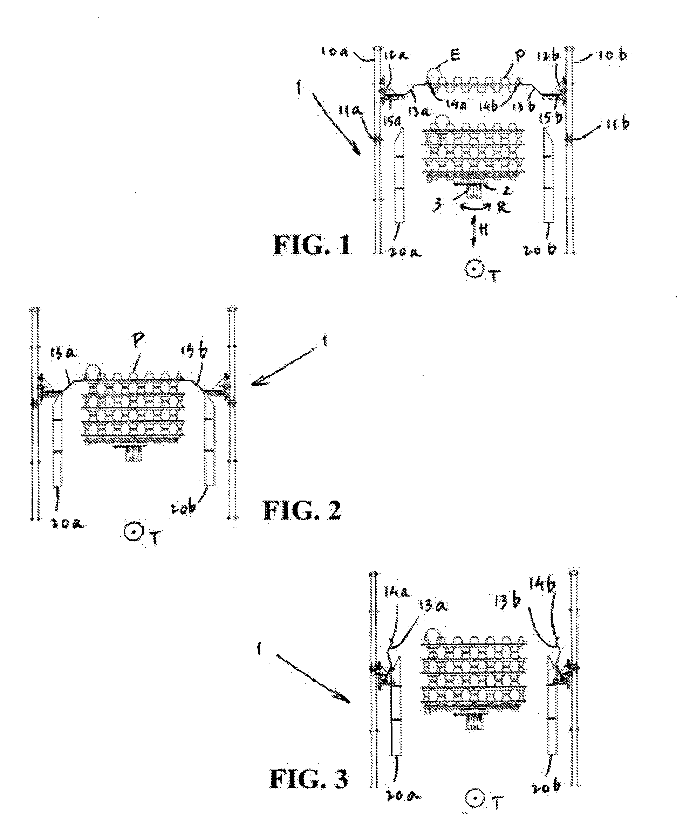

In FIGURE 1 there is schematically shown a front view of a stacker 1 for stacking packaging units P, for example, trays for eggs E. Regarding such trays P, it should be noted that they will form stable stacks only when each next tray P in a stack is rotated a quarter turn (or 90°) relative to the previous one (under it or above it). Furthermore, an elevation of conveying direction T is indicated for the usual direction of supply of filled trays P from behind the stacker 1, as well as for the direction of discharge of the stacks formed by the stacker 1, perpendicularly to the plane of the paper.

Such a stacker 1 comprises a carrier or platform 2 for - in a stacking area - carrying the stack to be formed. This carrier 2 is arranged on a rotary shaft 3 for rotating the carrier 2 with the packaging units P arranged thereon according to an arrow R as elucidated hereinabove. Such rotation R may be a reciprocating movement as represented with arrow R but may also be a continuous rotary movement, or even combinations of the two. As soon as the stack has been formed, whereby, usually, a stacking height of six trays is obtained, the stack is placed on a discharge conveyor for further conveyance in the direction T.

Conventionally, the carrier 2 performs a vertical displacement downwards to transfer the stack onto a discharge conveyor and thereupon a movement back up again to take up the proper position again for forming a next stack; this vertical back-and-forth movement is schematically represented with an arrow H. This discharge conveyor, which is mostly implemented as an endless conveyor belt, is not shown in this schematic view.

More particularly, the stacker 1 comprises, on both sides of supply and discharge, two respective wall profiles 10 a,b functioning as chain guards for circulating endless chain conveyors, schematically represented by a randomly positioned link 11 a,b. During this circulating movement, individual trays P with the eggs E thereon are taken up, carried upwards, thereupon displaced substantially following direction T, and then, according to the views in FIGURES 1, 2, 3, conveyed downwards again to be placed on the carrier 1 or on the packaging units P already stacked. After such conveyance and transfer, this movement is repeated for a next tray P. Such conveyance and transfer are carried out with a pick-up system the particulars of which are described in detail hereinafter. In such a circulating movement, multiple pick-up systems are included, more particularly six in this exemplary embodiment. To those skilled in the art it will be clear that the number of pick-up systems for this circular path depends, for example, on the dimensioning of such a stacker 1.

In the exemplary embodiment shown here, such a pick-up system comprises on each side a pick-up member 13 a,b which is coupled through a coupling piece 12 a,b with a link 11 a,b. The ends of the pick-up members 13 a,b are pick-up fingers 14 a,b which, when taking over a tray P from below, take it up, supporting it, and carry it around until the carrier 2, or the stack partly formed on it, is reached as indicated in FIGURES 1, 2, 3. Such pick-up fingers 14 a,b may be fork-shaped or also, in a known manner, make up edges. As follows from the drawing, the pick-up members 13a, 13b of each pick-up system can, in a first position, extend at least partly above the stacking area to hold a packaging unit P above that area.

For transferring a tray P and thereupon passing the carrier 2 or the stack partly formed thereon, the following measures have been taken. The pick-up members 13 a,b can pivot freely about pick-up member axes 15 a,b, from a horizontal pick-up or carrier position upwards (i.e., from a first position, shown in FIG. 2, to a moved-apart, second position shown in FIG. 3). This means that as soon as a tray P has been placed (in the stacking area) on the carrier 2 or on a partly formed stack, or partial stack, such a pick-up member 13 a, b is pushed up automatically upon the further movement of such pick-up system in downward direction. During this passage, the pick-up member 13 a,b will be dragged along the carrier 2 or partial stack. In order to wholly or partly obviate such dragging, there is arranged in the downward path of such pick-up member, adjacent the carrier 2 and on each side thereof, a steering block 20 a,b. The pick-up member 13 a,b, itself functioning as a cam, or being provided with a cam at the bottom or side thereof, will thereby be guided into a slot, be wholly or partly turned upwardly, and come clear of the carrier 2 or the partial stack. The space thereby cleared between a steering block 20 a,b and the carrier 2 or partial stack can thereupon be used to rotate the carrier 2 (while the pick-up members 13a, 13b are still next to the stacking area and move downwards) in order to allow prompt placement of a next tray P by a next pick-up system.

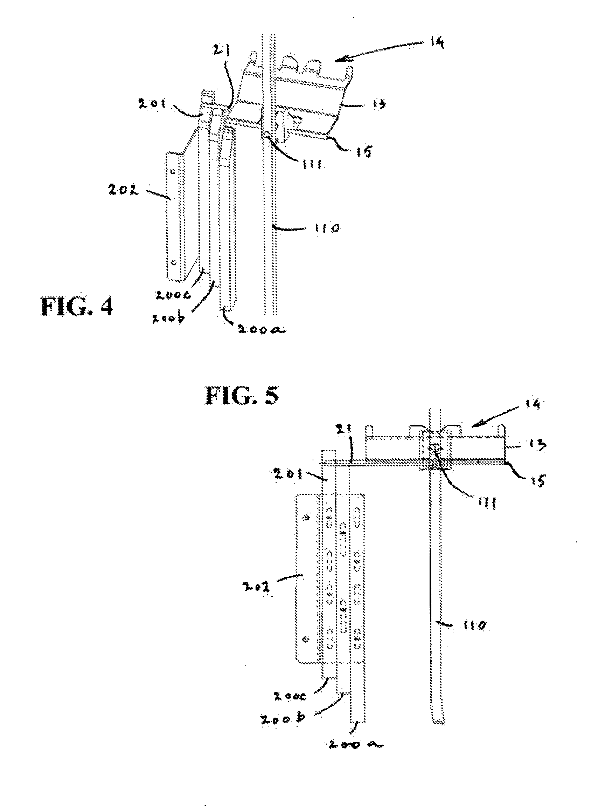

In FIGURES 4 and 5 an exemplary embodiment for such a pick-up member 13 is schematically represented, in FIGURE 4 in isometric view, in FIGURE 5 in a side view of FIGURE 4. The pick-up member 13 with pick-up fingers 14 is connected through a link connection 111 with a chain 110. Also indicated is the pick-up member axis 15 for this pick-up member 13, about which the pick-up member 13 can be turned up. Such turning or tilting from the horizontal position upwards is achieved by conducting a cam 21 over a steering track 200. More particularly, for this exemplary embodiment, three steering tracks 200 a,b,c are used, together constituting the earlier-mentioned steering block 20 a. These steering tracks 200 a,b,c are mounted on a mounting bracket 202 which in turn is connected with a wall profile 10. The three steering tracks 200 a,b,c shown are for three corresponding pick-up members 13 having cams 21 of corresponding lengths. These pick-up members are used for placing the three upper trays P in forming stacks of six trays P, with the longest cam 21 for the pick-up member 13 for the upper tray P as shown here.

This implies that for the pick-up members 13 intended for placement of the first three trays P of a stack no steering tracks are used and the pick-up members are only dragged along the partial stack and further will not be actively displaced, that is, turned in the present case. This means that the partial stack of one, two, or three trays P will be rotated only after the dragging passage of the first, second, and third pick-up member 13 in this cycle. For the depicted situation of the sixth pick-up member 13, there is indicated for steering track 200a a bend 201 with which the upward turn or tilt is effected. More particularly, in the case of placement of the first tray P, conceivably, there may be a carrier 2 projecting to such an extent that the pick-up member will be dragged along that too.

To those skilled in the art it will be clear that with further and other choices and combinations similar effects can be achieved. For example, the carrier 2 or a single steering track 20 may be moved up and down at suitable times, or, for example, the circulating speed of the chain 111 may be set such that the transfer of a tray P can be carried out from fixed positions.

Furthermore, it will be clear to those skilled in the art that there are several possibilities of displacing such a pick-up member 13 a,b in a well-defined driven manner. For example, a spring system may be used, which upon the slightest upward push pulls the pick-up member 13 a,b up and inwardly. Also, slide-in/slide-out systems, driven by cam systems, electromagnets or drive motors may be arranged. Also conceivable is a system providing for a substantially horizontal turn to swing clear.

With the measures as described above, it is entirely possible to set both the cycle time for forming a stack as well as the sub-periods thereof.

To those skilled in the art it will be clear that further small variants and modifications are possible, which are understood to be within the scope of protection of the appended claims.

### KEY TO SYMBOLS

- 1: stacker
- 2: carrier
- 3: rotary shaft
- 10 a,b: wall profiles, each functioning as chain guard
- 11 a,b: links
- 110: chain
- 111: link attachment
- 12 a,b: coupling pieces
- 13 a,b: pick-up members
- 14 a,b: pick-up fingers
- 15 a,b: pick-up member axes
- 20 a,b: steering blocks
- 21: cam
- 200 a,b,c: steering tracks
- 201: steering bend
- 202: mounting bracket
- P: packaging unit, tray
- E: egg
- T: conveying direction of supply and discharge of P
- R: rotary movement of carrier
- H: lift movement of carrier

## Claims

1. An apparatus for stacking substantially rectangular packaging units (P), for example trays, to form a substantially vertical stack, comprising:
- a feed conveyor for feeding packaging units;
- a series of at least two pick-up systems, in succession,
for thereupon, by each pick-up system each having two pick-up members (13a, 13b) on two opposite sides, individually picking up each next packaging unit (P) at corresponding two opposite sides thereof, and
for conveying said packaging unit to a carrier (2),
- the carrier (2) as stacking location for carrying the substantially vertical stack,
- a rotation unit for rotating the carrier (2) with the packaging units placed thereon through a quarter turn,
- a conveyor for placing the stack on a discharge conveyor, and
- the discharge conveyor for discharging the stack after placement of the last packaging unit of the stack;
**characterized in that**
a said pick-up member (13a, 13b) is driven, whereby, from at least a predetermined height of the stack formed, and after placing a packaging unit, said pick-up member is moved away from the stack at the stacking location.

2. An apparatus according to claim 1, **characterized in that** the pick-up member comprises a cam which is guided in a steering track, whereby the pick-up member is moved away from the stack.

3. An apparatus according to claim 2, **characterized in that** the steering track, in guiding the cam, turns the pick-up member away from the stack in downstream direction upwards about a pick-up member axis, while the steering track extends in vertical direction downwards beyond the carrier.

4. An apparatus according to claim 1, **characterized in that** the pick-up member is connected with a biased spring, wherein, upon placing the packaging unit, the pick-up member is pushed up about a pick-up member axis and is turned upwards downstream by the spring.

5. An apparatus according to any one of the preceding claims, wherein each pick-up member (13a, 13b) of a said pick-up system is pivotable about a pick-up member axis (15 a,b), and in particular is coupled to an endless pick-up member conveyor (11a, 11b).

6. An apparatus according to any one of the preceding claims, wherein each pick-up member (13a, 13b) of a said pick-up system extends, in a first position, at least partly above a stacking area to hold a said packaging unit (P) above the stacking area, wherein the pick-up member (13a, 13b) is pivotable from the first position upwards, to a second position in which the pick-up member (13a, 13b) is movable along the stacking area.

7. An apparatus according to any one of the preceding claims, wherein each pick-up member (3a, 13b) of a said pick-up system is pushable upwards from a horizontal pick-up or carrier position by a pick-up member drive.

8. An apparatus according to any one of the preceding claims, wherein said pick-up member is movable along a stacking area during rotation of the carrier (2) and a stack disposed thereon, extending in the stacking area.

9. An apparatus according to any one of the preceding claims, wherein said pick-up member is held at a distance from a stacking area after the pick-up member has placed a packaging unit.

10. A method for stacking substantially rectangular packaging units, for example trays, to form a substantially vertical stack, comprising,
- feeding packaging units with a feed conveyor;
- picking up a packaging unit from the feed conveyor with at least one pick-up system, having pick-up members on two opposite sides for picking up a packaging unit at respective opposite sides thereof;
- conveying said packaging unit to a carrier, with the stack being built up on the carrier as stacking location,
- rotating the carrier having thereon the at least partly formed stack through a quarter turn, after placement of a next packaging unit;
- thereupon conveying the completed stack to and onto a discharge conveyor, **characterized in that**
at least at a predetermined height of the at least partly formed stack, after placement of a packaging unit thereon, the respective pick-up members are moved away from the stack.

11. A method according to claim 10, wherein the carrier with the at least partly formed stack is rotated while said pick-up members of a said pick-up system are being moved along the stack, the pick-up members being at a distance from the stack during the movement along the stack.

12. A method according to claim 10 or 11, wherein the pick-up members, from a horizontal pick-up or carrier position are turned upwards to proceed to move along the at least partly formed stack.

13. A method according to any one of claims 10-12, wherein in said at least partly formed stack the even and odd stacked packaging units are rotated a quarter turn with respect to each other.

14. A method according to any one of claims 10-13, wherein a number of packaging units are placed by pick-up members, and form a partial stack on the carrier, wherein said pick-up members pass the partial stack without the carrier with the partial stack being rotated.

## Patentansprüche

1. Vorrichtung zum Stapeln von im Wesentlichen rechteckigen Verpackungseinheiten (P), beispielsweise Schalen, um einen im Wesentlichen vertikalen Stapel zu bilden, umfassend:
- einen Zubringerförderer zum Zuführen von Verpackungseinheiten;
- eine Serie von mindestens zwei Aufnahmesystemen in Folge,
um darauf, durch jedes Aufnahmesystem mit jeweils zwei Aufnahmeelementen (13a, 13b) auf zwei gegenüberliegenden Seiten, individuell jede nächste Verpackungseinheit (P) an entsprechenden zwei gegenüberliegenden Seiten davon aufzunehmen und die Verpackungseinheit zu einem Träger (2) zu transportieren,
- den Träger (2) als Stapelort zum Tragen des im Wesentlichen vertikalen Stapels,
- eine Rotationseinheit zum Drehen des Trägers (2) mit den darauf platzierten Verpackungseinheiten um eine Vierteldrehung,
- einen Förderer zum Platzieren des Stapels auf einen Abladeförderer,
und
- den Abladeförderer zum Abladen des Stapels nach dem Platzieren der letzten Verpackungseinheit des Stapels;
**dadurch gekennzeichnet, dass**
das Aufnahmeelement (13a, 13b) angetrieben ist, wobei von mindestens einer vorbestimmten Höhe des gebildeten Stapels und nach dem Platzieren einer Verpackungseinheit das Aufnahmeelement von dem Stapel an dem Stapelort weg bewegt wird.

2. Vorrichtung nach Anspruch 1, **dadurch gekennzeichnet, dass** das Aufnahmeelement eine Nocke umfasst, die in einer Lenkspur geführt wird, wobei das Aufnahmeelement von dem Stapel weg bewegt wird.

3. Vorrichtung nach Anspruch 2, **dadurch gekennzeichnet, dass** die Lenkspur beim Führen der Nocke das Aufnahmeelement von dem Stapel in Abwärtsstromrichtung aufwärts um eine Aufnahmeelementachse weg bewegt, während die Lenkspur in vertikaler Richtung abwärts über den Träger hinaus verläuft.

4. Vorrichtung nach Anspruch 1, **dadurch gekennzeichnet, dass** das Aufnahmeelement mit einer vorgespannten Feder verbunden ist, wobei beim Platzieren der Verpackungseinheit das Aufnahmeelement durch die Feder nach oben um eine Aufnahmeelementachse und aufwärts Stromabwärts gedreht wird.

5. Vorrichtung nach einem der vorhergehenden Ansprüche, wobei jedes Aufnahmeelement (13a, 13b) des Aufnahmesystems um eine Aufnahmeelementachse (15 a,b) drehbar ist und insbesondere an einen Aufnahmeelement-Endlosförderer (11a, 11b) gekoppelt ist.

6. Vorrichtung nach einem der vorhergehenden Ansprüche, wobei jedes Aufnahmeelement (13a, 13b) des Aufnahmesystems in einer ersten Position mindestens teilweise über einem Stapelbereich verläuft, um die Verpackungseinheit (P) über dem Stapelbereich zu halten, wobei das Aufnahmeelement (13a, 13b) von der ersten Position aufwärts drehbar ist zu einer zweiten Position, in der das Aufnahmeelement (13a, 13b) entlang dem Stapelbereich bewegbar ist.

7. Vorrichtung nach einem der vorhergehenden Ansprüche, wobei jedes Aufnahmeelement (3a, 13b) des Aufnahmesystems von einer horizontalen Aufnahme- oder Trägerposition durch einen Aufnahmeelementantrieb aufwärts drückbar ist.

8. Vorrichtung nach einem der vorhergehenden Ansprüche, wobei das Aufnahmeelement bewegbar ist entlang eines Stapelbereichs beim Drehen des Trägers (2) und eines darauf abgelegten Stapels, verlaufend in den Stapelbereich.

9. Vorrichtung nach einem der vorhergehenden Ansprüche, wobei das Aufnahmeelement, nachdem das Aufnahmeelement eine Verpackungseinheit platziert hat, in einem Abstand von einem Stapelbereich gehalten wird.

10. Verfahren zum Stapel von im Wesentlichen rechteckigen Verpackungseinheiten, beispielswese Schalen, um einen im Wesentlichen vertikalen Stapel zu bilden, umfassend,
- das Zuführen von Verpackungseinheiten mit einem Zubringerförderer;
- das Aufnehmen einer Verpackungseinheit von dem Zubringerförderer mit mindestens einem Aufnahmesystem mit Aufnahmeelementen auf zwei gegenüberliegenden Seiten zum Aufnehmen einer Verpackungseinheit auf den jeweils gegenüberliegenden Seiten davon;
- das Transportieren der Verpackungseinheit zu einem Träger, auf dem der Stapel mit dem Träger als Stapelort aufgebaut wird,
- das Drehen des Trägers mit darauf dem mindestens teilweise gebildeten Stapel um eine Vierteldrehung nach dem Platzieren einer nächsten Verpackungseinheit;
- anschließend das Transportieren des fertigen Stapels zu und auf einen Abladeförderer,
**dadurch gekennzeichnet, dass**
mindestens auf einer vorbestimmten Höhe des mindestens teilweise gebildeten Stapels, nachdem darauf eine Verpackungseinheit platziert wurde, die jeweiligen Aufnahmeelemente von dem Stapel weg bewegt werden.

11. Verfahren nach Anspruch 10, wobei der Träger mit dem mindestens teilweise gebildeten Stapel gedreht wird, während die Aufnahmeelemente des Aufnahmesystems an dem Stapel entlang bewegt werden, wobei die Aufnahmeelemente während der Bewegung entlang des Stapels in einem Abstand von dem Stapel sind.

12. Verfahren nach Anspruch 10 oder 11, wobei die Aufnahmeelemente von einer horizontalen Aufnahme- oder Trägerposition aufwärts gerichtet sind, um sich weiter entlang des mindestens teilweise gebildeten Stapels zu bewegen.

13. Verfahren nach einem der Ansprüche 10-12, wobei in dem mindestens teilweise gebildeten Stapel die geraden und ungeraden Verpackungseinheiten um eine Vierteldrehung zueinander gedreht werden.

14. Verfahren nach einem der Ansprüche 10-13, wobei eine Anzahl von Verpackungseinheiten durch Aufnahmeelemente platziert werden und einen teilweisen Stapel auf dem Träger bilden, wobei die Aufnahmeelemente den teilweisen Stapel passieren ohne dass der Träger mit dem teilweisen Stapel gedreht wird.

## Revendications

1. Appareil destiné à empiler des unités d'emballage sensiblement rectangulaires (P), par exemple des plateaux, afin de former une pile sensiblement verticale, comprenant :
- un dispositif de transport d'approvisionnement pour approvisionner les unités d'emballage ;
- une série de deux systèmes de prise automatique au moins, à la suite l'un de l'autre,
destinée, à l'aide de chaque système de prise automatique présentant deux éléments de prise automatique (13a, 13b) sur deux côtés opposés, à prendre de manière automatique et individuelle chaque unité d'emballage (P) suivante au niveau des deux côtés opposés correspondants de celle-ci, et à transporter ladite unité d'emballage vers un support (2) ;
- le support (2) en tant qu'emplacement d'empilement pour supporter la pile sensiblement verticale ;
- une unité de rotation pour faire tourner d'un quart de tour le support (2) sur lequel sont placées les unités d'emballage ;
- un dispositif de transport pour placer la pile sur un dispositif de transport d' évacuation ; et
- le dispositif de transport d'évacuation pour évacuer la pile après le placement de la dernière unité d'emballage de la pile ;
**caractérisé en ce que** :
un dit élément de prise automatique (13a, 13b) est entraîné, grâce à quoi, à partir d'au moins une hauteur prédéterminée de la pile formée, et après avoir placé une unité d'emballage, ledit élément de prise automatique est éloigné de la pile au niveau de l'emplacement d'empilement.

2. Appareil selon la revendication 1, **caractérisé en ce que** :
l'élément de prise automatique comprend une came qui est guidée dans une voie de guidage, grâce à quoi l'élément de prise automatique est éloigné de la pile.

3. Appareil selon la revendication 2, **caractérisé en ce que** :
la voie de guidage, lors du guidage de la came, fait tourner l'élément de prise automatique en l'éloignant de la pile dans la direction en aval vers le haut autour d'un axe d'élément de prise automatique, tandis que la voie de guidage s'étend dans une direction verticale vers le bas au-delà du support.

4. Appareil selon la revendication 1, **caractérisé en ce que** :
l'élément de prise automatique est connecté à un ressort de sollicitation, dans lequel, lors du placement de l'unité d'emballage, l'élément de prise automatique est soulevé autour d'un axe d'élément de prise automatique et est tourné vers le haut et en aval par le ressort.

5. Appareil selon l'une quelconque des revendications précédentes, dans lequel chaque élément de prise automatique (13a, 13b) dudit système de prise automatique peut tourner autour d'un axe d'élément de prise automatique (15a, b), et en particulier est couplé à un dispositif de transport d'élément de prise automatique sans fin (11a, 11b).

6. Appareil selon l'une quelconque des revendications précédentes, dans lequel chaque élément de prise automatique (13a, 13b) dudit système de prise automatique s'étend, dans une première position, au moins en partie au-dessus d'une zone d'empilement afin de tenir une dite unité d'emballage (P) au-dessus de la zone d'empilement, dans lequel l'élément de prise automatique (13a, 13b) peut pivoter à partir de la première position vers le haut, vers une seconde position dans laquelle l'élément de prise automatique (13a, 13b) peut se déplacer le long de la zone d'empilement.

7. Appareil selon l'une quelconque des revendications précédentes, dans lequel chaque élément de prise automatique (3a, 13b) dudit système de prise automatique peut être poussé vers le haut à partir d'une position de prise automatique horizontale ou de support par une commande d'élément de prise automatique.

8. Appareil selon l'une quelconque des revendications précédentes, dans lequel ledit élément de prise automatique est mobile le long d'une zone d'empilement au cours de la rotation du support (2) et d'une pile disposée dessus, en s'étendant dans la zone d'empilement.

9. Appareil selon l'une quelconque des revendications précédentes, dans lequel ledit élément de prise automatique est tenu à distance d'une zone d'empilement une fois que l'élément de prise automatique a placé une unité d'emballage.

10. Procédé destiné à empiler des unités d'emballage sensiblement rectangulaires, par exemple des plateaux, afin de former une pile sensiblement verticale, comprenant :
- l'approvisionnement des unités d'emballage à l'aide d'un dispositif de transport d' approvisionnement ;
- la prise de manière automatique d'une unité d'emballage à partir du dispositif de transport d'approvisionnement à l'aide d'un système de prise automatique au moins, présentant des éléments de prise automatique sur deux côtés opposés afin de prendre de manière automatique une unité d'emballage au niveau des deux côtés opposés respectifs de celle-ci ;
- le transport de ladite unité d'emballage vers un support, la pile s'accumulant sur le support en tant qu'emplacement d' empilement ;
- le fait de faire tourner d'un quart de tour le support sur lequel est placée la pile formée au moins en partie, après le placement d'une unité d'emballage suivante ;
- le transport de la pile réalisée vers et sur un dispositif de transport d'évacuation ;
**caractérisé en ce que** :
au moins à une hauteur prédéterminée de la pile formée au moins en partie, après le placement d'une unité d'emballage sur celle-ci, les éléments de prise automatique respectifs sont éloignés de la pile.

11. Procédé selon la revendication 10, dans lequel le support sur lequel se situe la pile formée au moins en partie, est tourné tandis que lesdits éléments de prise automatique dudit système de prise automatique sont déplacés le long de la pile, les éléments de prise automatique se situant à distance de la pile au cours du déplacement le long de la pile.

12. Procédé selon la revendication 10 ou 11, dans lequel les éléments de prise automatique, à partir d'une position de prise automatique horizontale ou de support sont tournés vers le haut afin de procéder à un déplacement le long de la pile formée au moins en partie.

13. Procédé selon l'une quelconque des revendications 10 à 12, dans lequel, dans ladite pile formée au moins en partie, les unités d'emballage empilées paires et impaires sont tournées d'un quart de tour les unes par rapport aux autres.

14. Procédé selon l'une quelconque des revendications 10 à 13, dans lequel un certain nombre d'unités d'emballage sont placées par des éléments de prise automatique, et forment une pile partielle sur le support, dans lequel lesdits éléments de prise automatique laissent passer la pile partielle sans que le support sur lequel se situe la pile partielle ne soit tourné.
